# EUROPÄISCHE PATENTSCHRIFT

(11) **EP 3 836 535 B1**
(45) Veröffentlichungstag und Bekanntmachung des Hinweises auf die Patenterteilung: **03.05.2023**
(21) Anmeldenummer: 20208814.2
(22) Anmeldetag: 20.11.2020
(51) Int. Cl.: G11B 27/30, H04N 5/222, H04N 5/225, H04N 5/77, H04N 5/91

(54) **DIGITALE BEWEGTBILDKAMERA**
DIGITAL MOTION PICTURE CAMERA
CAMÉRA NUMÉRIQUE À IMAGE ANIMÉE

(30) Priorität: 11.12.2019 DE 102019134009
(43) Veröffentlichungstag der Anmeldung: 16.06.2021
(73) Patentinhaber: Arnold & Richter Cine Technik GmbH & Co. Betriebs KG, 80807 München (DE)
(72) Erfinder: Hartmann, Lars, 81369 München (DE); Zucker, David, 80336 München (DE)
(74) Vertreter: Manitz Finsterwald Patent- und Rechtsanwaltspartnerschaft mbB

(56) Entgegenhaltungen:
- JP-A- 2012 100 216
- US-A1- 2010 042 650
- US-A1- 2019 065 857

## Beschreibung

Die vorliegende Erfindung betrifft eine digitale Bewegtbildkamera mit einem elektronischen Bildsensor zum Erzeugen von Bildsignalen und einer Steuereinheit, wobei die Steuereinheit dazu eingerichtet ist, in Ansprechen auf einen Szenen-Aufnahmebefehl aus den Bildsignalen des Bildsensors einen Sequenzdatenstrom zu erzeugen, welcher eine Sequenz von aufeinanderfolgenden Einzelbildern repräsentiert, und den Sequenzdatenstrom an eine Sequenzspeichereinrichtung zu ermitteln, um den Sequenzdatenstrom zu speichern.

Der Bildsensor einer derartigen Bewegtbildkamera erzeugt die Bildsignale in Abhängigkeit vom einfallenden Licht. Der Bildsensor kann eine zweidimensionale Matrix von lichtempfindlichen Sensorelementen aufweisen, insbesondere mit einer Farbfilteranordnung, beispielsweise nach dem Bayer-Muster (RGGB). Die Bewegtbildkamera kann ein integriertes Objektiv aufweisen, das eine Szene auf dem Bildsensor abbildet, oder einen Objektivanschluss zum Befestigen eines Wechselobjektivs. Die genannten Einzelbilder können beispielsweise jeweilige Vollbilder sein, oder Halbbilder, die nur zusammen mit anderen Halbbildern einen vollständigen Bildinhalt enthalten. Die Steuereinrichtung kann beispielsweise durch einen Mikroprozessor gebildet sein.

Bei kinematographischen Produktionen (auch als Filmproduktionen bezeichnet) werden zunächst eine Vielzahl von Bewegtbildsequenzen und in der Regel auch von zugehörigen Tonsequenzen aufgenommen, wobei im Rahmen einer Nachproduktion eine Auswahl, Bearbeitung und Strukturierung des aufgenommenen Bild- und Tonmaterials erfolgt, um dem produzierten Film seine endgültige Form zu geben. Diese Nachbearbeitung wird auch als Filmschnitt oder synonym als Filmmontage, Montage oder Schnitt bezeichnet.

Zur Durchführung des Filmschnitts ist es notwendig, die verschiedenen aufgenommenen Bewegtbildsequenzen bereits während der Aufnahme so zu kennzeichnen, dass diese während der späteren Nachbearbeitung problemlos identifiziert werden können.

Zur Kennzeichnung einer Bewegtbildsequenz wird häufig eine sogenannte Synchronklappe benutzt. Traditionelle Synchronklappen umfassen eine Tafel, welche mit den aufzuzeichnenden Identifizierungsinformationen beschriftet werden können. Ferner weist eine Synchronklappe zwei Balken auf, die aufeinandergeschlagen werden können, um ein Schlaggeräusch zu erzeugen. Da bei Filmproduktionen Bild und Ton oftmals mit getrennten Geräten aufgezeichnet werden, wird für den Filmschnitt ein eindeutiger Bezugspunkt oder eine Synchronmarke benötigt, um den Ton an der richtigen Stelle mit der Bildsequenz zu koppeln. Dieser Bezugspunkt wird mit Hilfe der Synchronklappe in Bild und Ton gesetzt. Er befindet sich dort, wo im Bild die Balken der Klappe geschlossen sind und im Ton das Schlaggeräusch zu hören ist. Es sind auch elektronische Synchronklappen gebräuchlich, bei denen die Informationen und/oder ein Zeitcode mittels einer elektronischen Anzeigevorrichtung, beispielsweise mittels LED-Ziffern, angezeigt werden können.

Werden die Bild- und Tonsequenzen nicht mit getrennten Geräten aufgenommen oder der Ton gar nicht aufgenommen, wird kein optisch-akustisches Klappsignal benötigt. In diesem Fall werden die Identifizierungsinformationen auf einer einfachen Tafel (English: slate) vermerkt, die von der Bewegtbildkamera aufgenommen wird.

In der Regel wird zur Aufnahme einer gekennzeichneten Bewegtbildsequenz zunächst ein Aufnahmebetrieb der Bewegtbildkamera aktiviert, in welchem aus den Bildsignalen des Bildsensors ein Sequenzdatenstrom erzeugt wird, und eine Synchronklappe oder Tafel wird in den von der Kamera erfassten Aufnahmebereich (Sichtfeld) gehalten und gegebenenfalls betätigt. Die Synchronklappe oder Tafel wird anschließend wieder entfernt, so dass die Kamera nunmehr die eigentliche Bewegtbildsequenz aufzeichnen kann, wobei die Kamera kontinuierlich aktiviert bleibt.

In bestimmten Situationen ist diese Vorgehensweise jedoch nicht praktikabel. Bei der Verwendung von Teleobjektiven, bei Makroaufnahmen oder bei einer auf einem Kran montierten Kamera ist es oftmals nicht möglich, in kontinuierlicher Weise zunächst die Synchronklappe und anschließend die Szene zu erfassen. In solchen Situationen hat es sich als nützlich erwiesen, zunächst eine kurze Bewegtbildsequenz aufzunehmen, welche lediglich die Synchronklappe erfasst, was auch als ein "Vordrehen" der Synchronklappe bezeichnet wird. Anschließend wird die Kamera in die eigentliche Aufnahmeposition zum Aufnehmen der Szene gebracht und es werden ggf. die Einstellungen der Kamera angepasst (z.B. Fokuslage, Brennweite). Zwischen dem Aufnehmen der Synchronklappe und der eigentlichen Bewegtbildsequenz wird die Kamera angehalten oder deaktiviert, um die notwendigen Einstellungs-, Montage- und Ausrichtungsvorgänge durchführen zu können.

Bei analogen Laufbildkameras, welche die Einzelbildsequenzen in linearer Weise auf einer fotochemischen Filmrolle aufzeichnen, hat sich diese Vorgehensweise bewährt. Allerdings kann diese Praxis bei digitalen Bewegtbildkameras nicht mehr sinnvoll angewendet werden. Sequenzspeichereinrichtungen für digitale Kameras zeichnen in nichtlinearer Weise auf, so dass für jede Bewegtbildsequenz ein eigener Bewegtbildclip (Clip) erzeugt werden muss. Bei der vorstehend beschriebenen Praxis des "Vordrehens" erzeugt eine digitale Bewegtbildkamera zunächst einen ersten Clip, welcher eine Aufnahme der Synchronklappe oder der Tafel enthält, während die eigentliche Szene in einem zweiten Clip aufgezeichnet wird. Der zweite Clip entspricht jedoch einem separaten Datenpaket und weist keinen unmittelbaren Bezug zu dem ersten Clip auf. Daher besteht weiterhin das Problem einer schnellen und eindeutigen Identifikation des jeweiligen Filmmaterials.

In JP 2012/100216 A ist eine Filmkamera beschrieben, bei welcher elektronisch erzeugte Identifizierungsinformationen in einen digital erzeugten Bilddatenstrom einmontiert werden können.

Es ist eine Aufgabe der Erfindung, eine digitale Bewegtbildkamera anzugeben, welche eine bessere Zuordnung zwischen einer aufgenommenen Szene und einer Identifizierung der aufgenommenen Szene, insbesondere in Form einer aufgenommenen Synchronklappe oder der Tafel, ermöglicht.

Diese Aufgabe erfolgt durch eine digitale Bewegtbildkamera mit den Merkmalen des Anspruchs 1.

Bei der erfindungsgemäßen digitalen Bewegtbildkamera ist die Steuereinheit dazu eingerichtet, in Ansprechen auf einen Identifizierungsbild-Aufnahmebefehl aus den Bildsignalen des Bildsensors einen Identifizierungsbild-Datensatz zu erzeugen, welcher wenigstens ein Szenen-Identifizierungsbild mit notwendigen Informationen zur Identifizierung einer Szene repräsentiert, und den Identifizierungsbild-Datensatz in einem Zwischenspeicher zwischenzuspeichern. Die Steuereinheit ist weiterhin dazu eingerichtet, danach in Ansprechen auf einen Szenen-Aufnahmebefehl aus den Bildsignalen des Bildsensors einen Sequenzdatenstrom zu erzeugen, welcher eine Sequenz von aufeinander folgenden Einzelbildern (also eine Bewegtbildsequenz) repräsentiert, und den Sequenzdatenstrom an eine Sequenzspeichereinrichtung zu übermitteln, um den Sequenzdatenstrom zu speichern. Die Steuereinheit ist ferner dazu eingerichtet, den zwischengespeicherten Identifizierungsbild-Datensatz in den nachfolgend erzeugten Sequenzdatenstrom derart einzufügen, dass in der Repräsentation des Sequenzdatenstroms das Szenen-Identifizierungsbild der Sequenz von aufeinanderfolgenden Einzelbildern vorangestellt ist und der Sequenzdatenstrom einschließlich des eingefügten Identifizierungsbild-Datensatzes einen geschlossenen Datenstrom bildet, der an die Sequenzspeichereinrichtung übermittelt wird.

Mit anderen Worten erfolgt das Erzeugen und Zwischenspeichern des Identifizierungsbild-Datensatzes in Ansprechen auf den Identifizierungsbild-Aufnahmebefehl in einem ersten Schritt vor einem Erzeugen des Sequenzdatenstroms. Das Einfügen des zwischengespeicherten Identifizierungsbild-Datensatzes in Ansprechen auf den Szenen-Aufnahmebefehl erfolgt in einem späteren zweiten Schritt.

Bevor die eigentliche Szene (Filmszene) aufgenommen wird und ein entsprechender Sequenzdatenstrom erzeugt wird, wird also zunächst ein Identifizierungsbild-Datensatz erzeugt, welcher Informationen umfassen kann, die eine spätere Identifizierung dieser Szene ermöglicht. So kann der Identifizierungsbild-Datensatz beispielsweise eine Wiedergabe einer Synchronklappe oder einer Informationstafel umfassen. Dieser Identifizierungsbild-Datensatz wird durch das Einfügen in den nachfolgend erzeugten Sequenzdatenstrom Bestandteil des Sequenzdatenstroms. In dem Sequenzdatenstrom ist die zeitliche Reihenfolge der aufeinander folgenden Einzelbilder einer in Ansprechen auf den Szenen-Aufnahmebefehl aufgenommenen Szene kodiert. Der Identifizierungsbild-Datensatz wird in den später erzeugten Sequenzdatenstrom derart eingefügt, dass bezüglich dieser zeitlichen Reihenfolge das durch den Identifizierungsbild-Datensatz repräsentierte Szenen-Identifizierungsbild der durch den Sequenzdatenstrom repräsentierten Szene vorangestellt ist. Hierdurch sind der Identifizierungsbild-Datensatz und der Sequenzdatenstrom eindeutig miteinander verknüpft.

Der Ausdruck "in der Repräsentation des Sequenzdatenstroms" bedeutet in diesem Zusammenhang also, dass bei einem bestimmungs- bzw. konventionsgemäßen Dekodieren des Sequenzdatenstroms und Wiedergeben der hierdurch repräsentierten Einzelbilder das Szenen-Identifizierungsbild vor der Szene erscheint. Somit kann das Szenen-Identifizierungsbild, beispielsweise im Rahmen der Nachproduktion, bei Wiedergabe auf einem üblichen Wiedergabegerät (z.B. Monitor) vor der Szene wahrgenommen werden.

Der somit erzeugte geschlossene Datenstrom, also der Sequenzdatenstrom einschließlich des eingefügten Identifizierungsbild-Datensatzes, kann als ein geschlossenes Datenpaket in der Sequenzspeichereinrichtung gespeichert werden, wodurch ein unfragmentiertes Speichern der Sequenz von Einzelbildern möglich ist.

Die Sequenzspeichereinrichtung kann in der Bewegtbildkamera integriert sein. Alternativ kann die Sequenzspeichereinrichtung auch durch eine externe, mit der Bewegtbildkamera verbindbare Sequenzspeichereinrichtung ausgestaltet sein, beispielsweise als ein über Kabel oder drahtlos gekoppelter Recorder. In beiden Fällen kann die Sequenzspeichereinrichtung wenigstens einen von außen zugänglichen Anschluss für ein oder mehrere austauschbare Speichermedien (beispielsweise entnehmbare Speicherkarten), oder wenigstens ein fest verbautes Speichermedium (z.B. wenigstens einen Speicherchip) umfassen. Ferner kann die Sequenzspeichereinrichtung auch einen eigenen Controller zum Steuern eines Speichervorgangs aufweisen.

Die genannte Zwischenspeicherung des Identifizierungsbild-Datensatzes kann in einem in der Steuereinheit vorhandenen oder hiermit verbundenen Zwischenspeicher, insbesondere einem flüchtigen oder nichtflüchtigen Zwischenspeicher erfolgen, z.B. in einem oder mehreren Speicherchips.

Gemäß einer Ausführungsform kann die Bewegtbildkamera zumindest ein erstes Bedienelement und ein zweites Bedienelement aufweisen, wobei eine Betätigung des ersten Bedienelements ein Erzeugen des Identifizierungsbild-Aufnahmebefehls auslöst und eine Betätigung des zweiten Bedienelements ein Erzeugen des Szenen-Aufnahmebefehls auslöst. Bei dem ersten Bedienelement kann es sich beispielsweise um eine fest belegte oder auch um eine frei belegbare Taste (Soft-Key) handeln. Das zweite Bedienelement kann beispielsweise eine herkömmliche Aufnahmetaste (REC-Taste) sein, insbesondere eine sogenannte Toggle-Taste, wobei eine erste Betätigung die Aufnahme startet und eine nachfolgende zweite Betätigung die gestartete Aufnahme wieder stoppt. Somit sind zwei voneinander verschiedene Bedienelemente vorgesehen, wobei beide Bedienelemente mit der Steuereinheit der Bewegtbildkamera verbunden sind. Alternativ kann auch ein einziges Bedienelement vorgesehen sein, das unterschiedlich betätigt wird. Beispielsweise kann eine kurze Betätigung (z.B. kürzer als 1 s) den Szenenaufnahmebefehl auslösen und eine lange Betätigung (z.B. länger als 1 s) den Identifizierungsbild-Aufnahmebefehl auslösen.

Insbesondere kann aufgrund der Betätigung des zweiten Bedienelements ein gegebenenfalls vorhandener, vorgängig erzeugter, zwischengespeicherter Identifizierungsbild-Datensatz in den Sequenzdatenstrom eingefügt werden. Sollte ein solcher Identifizierungsbild-Datensatz nicht vorhanden sein, wird bei der Betätigung des zweiten Bedienelements lediglich die Aufnahme der Szene gestartet. Dadurch wird sichergestellt, dass sich die erfindungsgemäße Bewegtbildkamera wie eine herkömmliche Bewegtbildkamera verwenden lässt, wenn eine separate Aufnahme eines Szenen-Identifizierungsbilds nicht erforderlich ist. Dies ist beispielsweise der Fall, wenn es die räumlichen Verhältnisse am Filmset zulassen, die Synchronklappe oder die Informationstafel kurzzeitig in den Aufnahmebereich zu halten und anschließend wieder zu entfernen.

Alternativ oder zusätzlich kann die Bewegtbildkamera einen Steuereingang aufweisen, über den der Identifizierungsbild-Aufnahmebefehl von außerhalb der Bewegtbildkamera empfangen und an die Steuereinheit der Bewegtbildkamera übermittelt werden kann. Somit kann der Identifizierungsbild-Aufnahmebefehl auch von außerhalb der Bewegtbildkamera ausgelöst werden, beispielsweise von einem Kameraassistenten mittels einer von der Bewegtbildkamera separaten Fernsteuereinheit. Eine derartige Fernsteuereinheit kann drahtlos (insbesondere per Funk) oder drahtgebunden (insbesondere über Kabel) mit dem Steuereingang der Bewegtbildkamera verbunden sein. Die Fernsteuereinheit kann auch dazu dienen, den Szenen-Aufnahmebefehl an die Bewegtbildkamera zu übermitteln, insbesondere über denselben Steuereingang wie den Identifizierungsbild-Aufnahmebefehl. Eine Fernsteuereinheit der genannten Art ist generell aus DE 196 29 484 A1 und WO 2010/046237 A1 bekannt.

Gemäß einer weiteren vorteilhaften Ausführungsform der Erfindung ist die Steuereinheit der Bewegtbildkamera dazu eingerichtet, den Sequenzdatenstrom einschließlich des eingefügten Identifizierungsbild-Datensatzes derart an die Sequenzspeichereinrichtung zu übermitteln, dass der Sequenzdatenstrom in einem einzigen Datenpaket, insbesondere in einer einzigen Datei speicherbar ist. Hierzu wird der Sequenzdatenstrom als geschlossener, insbesondere kontinuierlicher Datenstrom an die Sequenzspeichereinrichtung übermittelt und unfragmentiert gespeichert. Somit können sowohl der ursprüngliche Sequenzdatenstrom, welcher lediglich die eigentliche Szene repräsentiert, als auch der eingefügte Identifizierungsbild-Datensatz in demselben Datenpaket und insbesondere in derselben Datei gespeichert sein. Das genannte Datenpaket bzw. die genannte Datei kann beispielsweise in einem der Formate ARRIAW, ProRes, RAW, XAVC, XF-AVC gespeichert werden.

Vorteilhafterweise umfasst die Bewegtbildkamera die Sequenzspeichereinrichtung, wobei die Bewegtbildkamera dazu eingerichtet ist, den Sequenzdatenstrom in einem einzigen Datenpaket zu speichern, insbesondere in einer sogenannten Containerdatei. Bei einer Containerdatei oder einem Containerformat handelt es sich um eine Datenstruktur, mit der einzelne Datenströme eventuell verschiedener Formate zu einem Datenstrom zum Beispiel zu der genannten Containerdatei, zusammengeführt werden können (Multiplexing). Container enthalten in der Regel Daten verschiedener Formate. So ist beispielsweise der sogenannte AVI-Container bekannt, welcher beispielsweise eine mit einem Xvid-Codec erstellte MPEG-4-Videospur und eine mit einem Encoder wie LAME erstellte MP3-Audiospur enthalten. Einige Containerformate können darüber hinaus weitere Daten wie Untertitel, Menüstrukturen oder zusätzliche Audiospuren enthalten. Das Einfügen in die Containerdatei erfolgt vorzugsweise mittels der Steuereinheit und/oder der Sequenzspeichereinrichtung, insbesondere zusammen mit weiteren Daten oder Datenströmen, zum Beispiel mit Audiodatenströmen oder Metadaten.

Gemäß einer weiteren Ausführungsform ist die Steuereinheit der Bewegtbildkamera dazu eingerichtet, den Sequenzdatenstrom vor oder während des Speicherns zu komprimieren. Dabei können verlustfreie oder auch verlustbehaftete Datenkompressionsverfahren angewendet werden, wobei die Datenkompression sowohl in der Steuereinheit als auch in der Sequenzspeichereinrichtung durchgeführt werden kann.

Bei einigen Ausführungsformen befindet sich der eingefügte Identifizierungsbild-Datensatz am Anfang des Sequenzdatenstroms. Dadurch ist es möglich, bei einer Nachbearbeitung des aufgezeichneten Sequenzdatenstroms den darin gespeicherten Identifizierungsbild-Datensatz möglichst rasch zu visualisieren, um eine problemlose Identifizierung der aufgenommenen Szene zu gewährleisten.

Gemäß einer Ausführungsform repräsentiert der Identifizierungsbild-Datensatz ein einzelnes Szenen-Identifizierungsbild. Insbesondere wird in Ansprechen auf den Identifizierungsbild-Aufnahmebefehl nur ein einziges Szenen-Identifizierungsbild erzeugt, wobei auch nur ein einziges Szenen-Identifizierungsbild in den Sequenzdatenstrom eingefügt wird.

Alternativ kann der Identifizierungsbild-Datensatz eine mehrere Einzelbilder umfassende Szenen-Identifizierungssequenz repräsentieren. Diese Szenen-Identifizierungssequenz kann aus mehreren in Folge erfassten Einzelbildern oder aus mehreren Kopien eines einzigen Einzelbildes zusammengesetzt sein. Die Szenensequenz ist somit entweder eine kurze Bewegtbildaufnahme oder es handelt sich um eine Folge von Szenen-Identifizierungsbildern, welche auf einem einzigen Szenen-Identifizierungsbild beruht, das anschließend dupliziert wurde. Die Anzahl der Bilder der Szenen-Identifizierungssequenz kann dabei fest vorgegeben sein oder durch einen Benutzer veränderbar sein. Die Anzahl kann beispielsweise durch entsprechende Einstellungen in einem Setup-Menü oder auch durch die Dauer einer Betätigung eines Bedienelements bestimmt werden, welches zum Erzeugen des Identifizierungsbild-Aufnahmebefehls vorgesehen ist.

Gemäß einer weiteren Ausführungsform der Erfindung sind ein oder mehrere in dem ursprünglichen Sequenzdatenstrom vorhandene Einzelbilder durch den eingefügten Identifizierungsbild-Datensatz ersetzt, wobei die Anzahl der ersetzten Einzelbilder insbesondere gleich der Anzahl der Bilder des Identifizierungsbild-Datensatzes sein kann. Bei einigen Ausführungsformen sind das erste oder mehrere unmittelbar am Anfang des ursprünglichen Sequenzdatenstroms vorhandene Einzelbilder durch den Identifizierungsbild-Datensatz ersetzt. Die ersetzten Einzelbilder werden verworfen. Da unmittelbar nach dem Erzeugen des Szenen-Aufnahmebefehls zunächst der Identifizierungsbild-Datensatz gespeichert werden muss, aber bereits zu diesem Zeitpunkt der Sequenzdatenstrom mit den Szenenbildern zur Speicherung ansteht, werden bei dieser Ausgestaltung die Anforderungen an eine gegebenenfalls notwendige Pufferung des Sequenzdatenstroms zumindest reduziert. Das Ersetzen des jeweiligen Einzelbilds durch den eingefügten Identifizierungsbild-Datensatz kann von der Steuereinheit der Bewegtbildkamera durchgeführt werden.

Gemäß einer weiteren Ausführungsform kann die Steuereinheit dazu eingerichtet sein, das Erzeugen und Speichern des Sequenzdatenstroms erst in Ansprechen auf den Szenenaufnahmebefehl, jedoch noch nicht in Ansprechen auf den Identifizierungsbild-Aufnahmebefehl zu initiieren.

Sobald ein Identifizierungsbild-Datensatz erzeugt und zwischengespeichert worden ist, kann dies einem Benutzer der Bewegtbildkamera signalisiert werden, beispielsweise durch ein entsprechendes Symbol in einem elektronischen Sucher der Bewegtbildkamera und/oder durch eine andere äußere visuelle Anzeige, welche insbesondere an dem ersten Bedienelement vorgesehen sein kann.

Gemäß einer weiteren Ausführungsform kann die Steuereinheit dazu eingerichtet sein, den Identifizierungsbild-Datensatz in dem Zwischenspeicher gespeichert zu halten, bis die Steuereinheit einen Szenen-Aufnahmebefehl empfängt. Dadurch wird gewährleistet, dass der Szenen-Aufnahmebefehl nicht unmittelbar nach dem Erzeugen und Zwischenspeichern des Identifizierungsbild-Datensatzes empfangen werden muss, sondern dies auch mit einer zeitlichen Verzögerung geschehen kann.

Gemäß einer weiteren Ausführungsform kann die Steuereinheit dazu eingerichtet sein, den Identifizierungsbild-Datensatz aufgrund der Betätigung eines zugeordneten Bedienelements zu löschen, bevor der Identifizierungsbild-Datensatz in einen nachfolgend erzeugten Sequenzdatenstrom eingefügt wird. Hierdurch wird vermieden, dass ein gegebenenfalls fehlerhaft erzeugter oder nicht mehr benötigter Identifizierungsbild-Datensatz unbeabsichtigt in einen nachfolgend erzeugten Sequenzdatenstrom eingefügt wird. So kann beispielsweise eine wiederholte oder auch eine lang andauernde Betätigung des vorstehend genannten ersten Bedienelements einen zuvor erzeugten und zwischengespeicherten Identifizierungsbild-Datensatz löschen oder überschreiben. Zum Beispiel kann bei einer ersten Betätigung des Bedienelements ein Identifizierungsbild-Datensatz aufgenommen werden, bei einer zweiten Betätigung der zuvor aufgenommene Identifizierungsbild-Datensatz gelöscht werden und bei einer dritten Betätigung ein neuer Identifizierungsbild-Datensatz aufgenommen werden. Alternativ kann eine erste kurze Betätigung des Bedienelements einen Identifizierungsbild-Datensatz aufnehmen. Bei einer zweiten langen Betätigung erfolgt ein Löschen des zuvor aufgenommenen Datensatzes, während bei einer zweiten kurzen Betätigung der vorhandene Identifizierungsbild-Datensatz mit einem neuen Identifizierungsbild-Datensatz überschrieben wird. Alternativ kann auch ein drittes Bedienelement als "Löschtaste" für den Identifizierungsbild-Datensatz vorgesehen sein.

Gemäß einer weiteren Ausführungsform kann die Steuereinheit der Bewegtbildkamera dazu eingerichtet sein, ein Wiedergabegerät zu einem Wiedergeben des Szenen-Identifizierungsbildes, welches dem zwischengespeicherten Identifizierungsbild-Datensatz entspricht, anzusteuern. Somit kann der Benutzer (z.B. Kameramann) sich insbesondere vor dem Auslösen eines Szenen-Aufnahmebefehls vergewissern, dass das korrekte Szenen-Identifizierungsbild zwischengespeichert ist und für ein nachfolgendes Aufnehmen eines Sequenzdatenstroms (entsprechend einer Bewegtbildsequenz) bereitsteht. Bei dem genannten Wiedergabegerät kann es sich beispielsweise um einen integrierten Monitor oder elektronischen Sucher der Bewegtbildkamera handeln, oder um einen externen Monitor, welcher an einen Bildsignalausgang der Bewegtbildkamera angeschlossen ist (drahtlos oder drahtgebunden). Das Auslösen einer solchen Wiedergabe des Szenen-Identifizierungsbildes kann insbesondere infolge eines entsprechenden Bedienelements erfolgen, welches mit der Steuereinheit der Bewegtbildkamera zumindest indirekt verbunden ist.

Die Erfindung bezieht sich unabhängig von der erläuterten Bewegtbildkamera auch auf eine Fernsteuereinheit zum Fernsteuern einer zugeordneten Bewegtbildkamera der erläuterten Art, wobei die Fernsteuereinheit dazu eingerichtet ist, wahlweise einen Identifizierungsbild-Aufnahmebefehl oder einen Szenen-Aufnahmebefehl zu erzeugen und an die zugeordneten Bewegtbildkamera zu übermitteln, wobei der Identifizierungsbild-Aufnahmebefehl die Anweisung enthält, einen Identifizierungsbild-Datensatz zu erzeugen, welcher wenigstens ein Szenen-Identifizierungsbild repräsentiert, und wobei der Szenen-Aufnahmebefehl die Anweisung enthält, einen Sequenzdatenstrom zu erzeugen, welcher eine Sequenz von aufeinanderfolgenden Einzelbildern repräsentiert. Die Fernsteuereinheit kann eine Auswerte- und Steuereinrichtung aufweisen, die dazu eingerichtet ist, wahlweise den Identifizierungsbild-Aufnahmebefehl oder den Szenen-Aufnahmebefehl zu erzeugen. Die Fernsteuereinheit kann ferner einen Signalausgang aufweist, über den der erzeugte Identifizierungsbild-Aufnahmebefehl und der erzeugte Szenen-Aufnahmebefehl an die zugeordneten Bewegtbildkamera übermittelt werden können. Dies kann drahtlos (insbesondere per Funk) oder drahtgebunden (insbesondere über Kabel) geschehen.

Eine derartige Fernsteuereinheit kann, analog wie vorstehend für die Bewegtbildkamera erläutert, ein erstes Bedienelement und ein zweites Bedienelement aufweisen, wobei eine Betätigung des ersten Bedienelements ein Erzeugen des Identifizierungsbild-Aufnahmebefehls und Übermitteln desselben an die Bewegtbildkamera auslöst, und wobei eine Betätigung des zweiten Bedienelements ein Erzeugen des Szenen-Aufnahmebefehls und Übermitteln desselben an die Bewegtbildkamera auslöst. Alternativ kann die Fernsteuereinheit auch ein einziges Bedienelement aufweisen, das unterschiedlich betätigt wird, um wahlweise entweder den Identifizierungsbild-Aufnahmebefehl oder den Szenen-Aufnahmebefehl zu erzeugen und an die Bewegtbildkamera zu übermitteln.

Die Fernsteuereinheit kann auch zum Fernsteuern des Kameraobjektivs eingerichtet sein, insbesondere zum Fernsteuern eines entsprechenden Objektivstellmotors (z.B. Verstellen der Fokuslage, der Brennweite oder der Irisblendenöffnung). Bei dieser Ausführungsform weist die Fernsteuereinheit wenigstens ein bewegliches Bedienelement, z.B. ein Stellrad, zum Einstellen von Objektivsteuerbefehlen auf, wobei die Auswerte- und Steuereinrichtung der Fernsteuereinheit dazu ausgebildet ist, entsprechende Objektivsteuersignale in Abhängigkeit von den eingestellten Objektivsteuerbefehlen zu erzeugen und an die Bewegtbildkamera zu übermitteln.

Im Übrigen kann die Fernsteuereinheit analog wie vorstehend für die Bewegtbildkamera erläutert und wie auch in DE 196 29 484 A1 und WO 2010/046237 A1 beschrieben ausgebildet sein.

Weitere vorteilhafte Ausführungsformen der Erfindung ergeben sich aus den Unteransprüchen, der Beschreibung und den Zeichnungen.

Die Erfindung wird nachfolgend anhand eines Ausführungsbeispiels mit Bezug auf die Zeichnungen beschrieben. Es zeigen:
- Fig. 1: ein schematisches Blockdiagramme einer erfindungsgemäßen digitalen Bewegtbildkamera; und
- Fig. 2: eine schematische Repräsentation eines Sequenzdatenstroms.

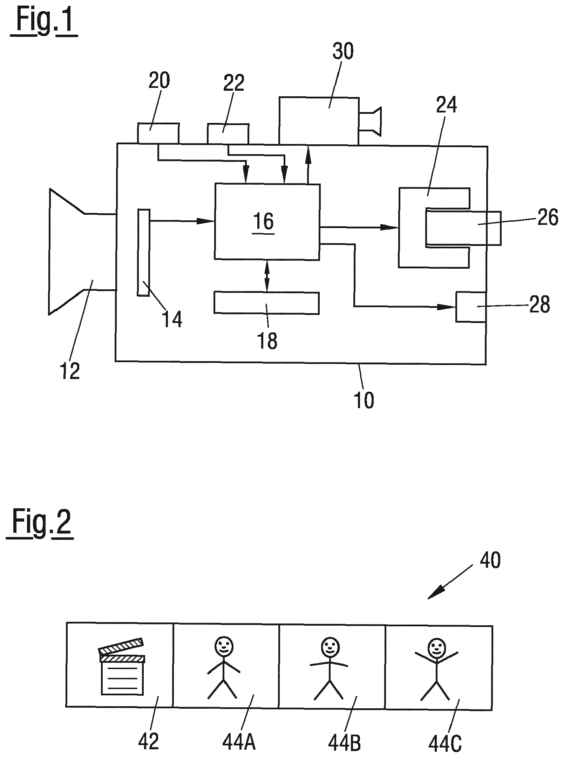

Fig. 1 zeigt schematisch eine digitale Bewegtbildkamera 10 mit einem Objektiv 12, welches als Wechselobjektiv ausgebildet oder fest mit der Bewegtbildkamera 10 verbunden sein kann. Das Objektiv 12 bildet die zu erfassenden Bilder auf einem Bildsensor 14 ab, welcher beispielsweise als CMOS-Bildsensor oder CCD-Bildsensor ausgebildet sein kann. Der Bildsensor 14 wandelt die erfassten Bilder in elektronische Bildsignale um und übermittelt diese an eine Steuereinheit 16.

Die Steuereinheit 16 ist zum Empfangen, Verarbeiten und Weiterleiten der Bildsignale eingerichtet. Weiterhin ist die Steuereinheit 16 dazu eingerichtet, von den verschiedenen Komponenten der Bewegtbildkamera 10 Steuerbefehle zu empfangen und/oder Steuerbefehle an die Komponenten zu übermitteln. Die Steuereinheit 16 kann modular aufgebaut sein. Die Steuereinheit 16 ist mit einem Zwischenspeicher 18 verbunden, in welchem Bilddatensätze, welche ein einzelnes Bild oder kurze Bildsequenzen umfassen können, zwischengespeichert werden können, d.h. die Steuereinheit kann einen Bilddatensatz in dem Zwischenspeicher 18 abspeichern und auch wieder auslesen.

Die Steuereinheit 16 ist weiterhin mit einer hier abgekürzt als Speichereinrichtung 24 bezeichneten Sequenzspeichereinrichtung und einem Anschluss 28 für eine externe Speichereinrichtung bzw. Sequenzspeichereinrichtung verbunden, um die Bildsignale in Form eines Sequenzdatenstroms 40 zur Speicherung an die Speichereinrichtung 24 bzw. an eine an dem Anschluss 28 angeschlossene externe Speichereinrichtung zu übermitteln. Die Speichereinrichtung 24 umfasst im vorliegenden Ausführungsbeispiel ein wechselbares Speichermedium 26, beispielsweise einen Festkörperspeicher. Bei Abwandlungen der Bewegtbildkamera 10 kann wahlweise auch nur eine interne Speichereinrichtung 24 oder nur ein Anschluss 28 für eine externe Speichereinrichtung vorgesehen sein.

Zur Überwachung und Kontrolle der von dem Bildsensor 14 erfassten Bilder ist ein mit der Steuereinheit 16 verbundener elektronischer Sucher 30 mit einer elektronischen Bildanzeigevorrichtung (Display) vorgesehen.

Die Steuereinheit 16 ist weiterhin mit einem ersten und einem zweiten Bedienelement 20, 22 verbunden, welche beispielsweise als Taster ausgestaltet sein können. Das erste Bedienelement 20 und das zweiten Bedienelement 22 können alternativ oder zusätzlich auch außerhalb der Bewegtbildkamera 10 vorgesehen sein, insbesondere an einer zugeordneten Fernsteuereinheit.

Nachfolgend wird mit Bezug auf Fig. 1 und 2 die Funktionsweise der Bewegtbildkamera 10 näher erläutert.

Vor der Aufnahme einer Szene soll zunächst ein Identifizierungsbild-Datensatz erzeugt werden, welcher eine spätere Identifizierung der nachfolgend aufgenommenen Szene ermöglicht. Zu diesem Zweck soll zunächst eine Synchronklappe oder eine Informationstafel erfasst werden, auf welcher die zur Identifizierung der nachfolgenden Szene notwendigen Informationen angeschrieben sind oder angezeigt werden.

Zum Erzeugen dieses Identifizierungsbild-Datensatzes betätigt ein Benutzer der Bewegtbildkamera 10 zunächst das erste Bedienelement 20, d.h. er übt einen kurzen Tastendruck auf das erste Bedienelement 20 aus. Hierdurch wird ein Identifizierungsbild-Aufnahmebefehl ausgelöst, welcher die Steuereinheit 16 dazu veranlasst, aus den Bildsignalen des Bildsensors 14 einen Identifizierungsbild-Datensatz zu erzeugen. Im Ausführungsbeispiel umfasst dieser Identifizierungsbild-Datensatz lediglich ein einziges Szenen-Identifizierungsbild 42, welches eine Wiedergabe einer Synchronklappe oder Informationstafel umfasst.

Gemäß einer Abwandlung kann durch die Betätigung des ersten Bedienelements 20 auch eine mehrere Einzelbilder umfassende Szenen-Identifizierungssequenz erfasst werden, wobei die Länge bzw. die Anzahl der Einzelbilder fest oder benutzerdefiniert vorgegeben sein kann. Die Länge dieser Sequenz kann beispielsweise durch eine entsprechende Menüeingabe oder durch die Dauer der Betätigung des ersten Bedienelements 20 bestimmt werden. Es ist auch denkbar, dass eine erste kurze Betätigung des ersten Bedienelements 20 die Erfassung der Szenen-Identifizierungssequenz startet und eine nochmalige Betätigung die Erfassung stoppt.

Der erfasste Identifizierungsbild-Datensatz mit dem Szenen-Identifizierungsbild 42 oder der Szenen-Identifizierungssequenz wird von der Steuereinheit 16 an den Zwischenspeicher 18 zur Zwischenspeicherung übermittelt. Anschließend kann die Bewegtbildkamera 10 für die Aufnahme der eigentlichen Szene eingerichtet werden, was beispielsweise ein Umpositionieren der Bewegtbildkamera 10 oder ein Ändern der Objektiveinstellungen (z.B. Brennweite, Fokus) umfassen kann.

Gemäß einer Abwandlung kann das Vorliegen eines Identifizierungsbild-Datensatzes im Sucher 30 und/oder einer anderen, an der Bewegtbildkamera 10 vorgesehenen Anzeigevorrichtung signalisiert werden. Eine Signalisierung im Sucher 30 kann beispielsweise durch Einblenden eines entsprechenden Symbols in der Bildanzeigevorrichtung erfolgen.

Wenn nun nachfolgend die eigentliche Szene aufgezeichnet werden soll, wird die Bewegtbildkamera 10 bzw. ein Aufnahmebetrieb der Bewegtbildkamera 10 durch Betätigung des zweiten Bedienelements 22 aktiviert, d.h. es wird ein Szenen-Aufnahmebefehl an die Steuereinheit 16 übermittelt. Nach dem Empfangen des Szenen-Aufnahmebefehls beginnt die Steuereinheit 16 damit, einen Sequenzdatenstrom 40 zu erzeugen und an die Speichereinrichtung 24 und an den Anschluss 28 zu übermitteln. Dabei wird zuerst der Szenenidentifizierungs-Datensatz mit dem Szenen-Identifizierungsbild 42 übermittelt und unmittelbar daran anschließend die aufgrund des Szenen-Aufnahmebefehls erzeugten Einzelbilder 44A bis 44C der eigentlichen Bewegtbildsequenz.

Solange der Aufnahmebetrieb der Bewegtbildkamera 10 zum Erfassen der Szene aktiviert ist, wird der Sequenzdatenstrom 40 als geschlossener Datenstrom auf dem Speichermedium 26 und/oder auf einem Speichermedium der an dem Anschluss 28 angeschlossenen externen Speichereinrichtung in Form eines geschlossenen Datenpakets oder einer geschlossenen Datei gespeichert.

Durch eine nochmalige Betätigung des zweiten Bedienelements 22 durch den Benutzer kann das Aufzeichnen des Sequenzdatenstroms 40 beendet werden. Hierdurch wird das Datenpaket bzw. die Datei geschlossen. Ein erneutes Erzeugen eines Szenen-Aufnahmebefehls führt zu einem Erzeugen eines neuen Datenpakets bzw. einer neuen Datei. Ein Anfügen von weiteren Einzelbildern an die bereits geschlossene Datei ist technisch nicht möglich oder zumindest nicht gestattet, um eine Unterscheidung der verschiedenen Szenen zu ermöglichen.

Fig. 2 zeigt demnach in einer von links nach rechts verlaufenden zeitlichen Reihenfolge zunächst das Szenen-Identifizierungsbild 42 und anschließend die Sequenz von aufeinanderfolgenden Einzelbildern 44A bis 44C.

Zusammengefasst wird der zwischengespeicherte Identifizierungsbild-Datensatz in einen nachfolgend erzeugten Szenen-Sequenzdatenstrom derart eingefügt, dass in der Repräsentation des Sequenzdatenstroms 40 das Szenen-Identifizierungsbild 42 des Identifizierungsbild-Datensatzes der Sequenz von aufeinanderfolgenden Einzelbildern 44A bis 44C vorangestellt ist (wie in Fig. 2 gezeigt) und der Sequenzdatenstrom 40 einschließlich des eingefügten Identifizierungsbild-Datensatzes einen geschlossenen Datenstrom bildet.

In diesem Zusammenhang bedeutet der Ausdruck "in der Repräsentation des Sequenzdatenstroms", dass bei einem bestimmungsgemäßen Dekodieren des Sequenzdatenstroms 40 und Wiedergeben der hierdurch repräsentierten Einzelbilder 42, 44A bis 44C das Szenen-Identifizierungsbild 42 zeitlich vor den Szenen-Einzelbildern 44A bis 44C erscheint.

Das durch Abspeichern des Sequenzdatenstroms 40 erzeugte Datenpaket bzw. die Datei kann gegebenenfalls noch weitere Daten, beispielsweise Metadaten wie Zeitdaten oder Einstellungsdaten der Kamera umfassen. Diese zusätzlichen Daten oder Metadaten können an beliebiger Stelle, insbesondere auch an mehreren Stellen in dem Datenpaket oder der Datei gespeichert sein, insbesondere auch am Anfang des Datenpakets oder der Datei.

Unmittelbar nach dem Auslösen des Szenen-Aufnahmebefehls durch Betätigen des zweiten Bedienelements werden bereits erste Einzelbilder 44A bis 44C erzeugt. Allerdings muss zu diesem Zeitpunkt zunächst der Identifizierungsbild-Datensatz gespeichert werden. Um zu verhindern, dass die bereits erzeugten Einzelbilder der Bewegtbildsequenz verlorengehen, kann ein ohnehin vorhandener Pufferspeicher oder auch ein zusätzlicher Pufferspeicher zur Pufferung der Bewegtbildsequenz genutzt werden. Alternativ können die bereits erzeugten Einzelbilder der Bewegtbildsequenz solange verworfen werden, bis der Identifizierungsbild-Datensatz vollständig in den Sequenzdatenstrom 40 eingefügt und gespeichert wurde.

### Bezugszeichenliste

- 10: Bewegtbildkamera
- 12: Objektiv
- 14: Bildsensor
- 16: Steuereinheit
- 18: Zwischenspeicher
- 20: erstes Bedienelement
- 22: zweites Bedienelement
- 24: Speichereinrichtung
- 26: Speichermedium
- 28: Anschluss für externe Speichereinrichtung
- 30: Sucher
- 40: Sequenzdatenstrom, Datenpaket
- 42: Szenen-Identifizierungsbild
- 44A bis 44C: Einzelbild

## Patentansprüche

1. Digitale Bewegtbildkamera (10), mit einem elektronischen Bildsensor (14) zum Erzeugen von Bildsignalen, und einer Steuereinheit (16),
wobei die Steuereinheit (16) dazu eingerichtet ist, in Ansprechen auf einen Szenen-Aufnahmebefehl aus den Bildsignalen des Bildsensors (14) einen Sequenzdatenstrom (40) zu erzeugen, welcher eine Sequenz von aufeinander folgenden Einzelbildern (44A - 44C) repräsentiert, und den Sequenzdatenstrom (40) an eine Sequenzspeichereinrichtung (24) zu übermitteln, um den Sequenzdatenstrom (40) zu speichern,
**dadurch gekennzeichnet,**
**dass** die Steuereinheit (16) dazu eingerichtet ist, in Ansprechen auf einen Identifizierungsbild-Aufnahmebefehl aus den Bildsignalen des Bildsensors (14) einen Identifizierungsbild-Datensatz zu erzeugen, welcher wenigstens ein Szenen-Identifizierungsbild (42) mit notwendigen Informationen zur Identifizierung einer Szene repräsentiert, und den Identifizierungsbild-Datensatz in einem Zwischenspeicher (18) zwischenzuspeichern, wobei die Steuereinheit (16) ferner dazu eingerichtet ist, den zwischengespeicherten Identifizierungsbild-Datensatz in einen nachfolgend erzeugten Sequenzdatenstrom (40) derart einzufügen, dass in der Repräsentation des Sequenzdatenstroms (40) das Szenen-Identifizierungsbild (42) der Sequenz von aufeinander folgenden Einzelbildern (44A - 44C) vorangestellt ist und der Sequenzdatenstrom (40) einschließlich des eingefügten Identifizierungsbild-Datensatzes einen geschlossenen Datenstrom bildet.

2. Digitale Bewegtbildkamera (10) nach Anspruch 1,
wobei die Bewegtbildkamera (10) zumindest ein erstes Bedienelement (20) und ein zweites Bedienelement (22) aufweist, wobei eine Betätigung des ersten Bedienelements (20) ein Erzeugen des Identifizierungsbild-Aufnahmebefehls auslöst und eine Betätigung des zweiten Bedienelements (22) ein Erzeugen des Szenen-Aufnahmebefehls auslöst.

3. Digitale Bewegtbildkamera (10) nach Anspruch 1 oder 2,
wobei die Bewegtbildkamera (10) einen Steuereingang aufweist, der zum Empfangen des Identifizierungsbild-Aufnahmebefehls ausgebildet ist.

4. Digitale Bewegtbildkamera (10) nach einem der vorhergehenden Ansprüche,
wobei die Steuereinheit (16) dazu eingerichtet ist, den Sequenzdatenstrom (40) einschließlich des eingefügten Identifizierungsbild-Datensatzes derart an die Sequenzspeichereinrichtung (24) zu übermitteln, dass der Sequenzdatenstrom (40) einschließlich des eingefügten Identifizierungsbild-Datensatzes in einem einzigen Datenpaket, insbesondere in einer einzigen Datei, speicherbar ist.

5. Digitale Bewegtbildkamera (10) nach einem der vorhergehenden Ansprüche,
wobei die Bewegtbildkamera (10) die Sequenzspeichereinrichtung (24) umfasst, wobei die Bewegtbildkamera (10) dazu eingerichtet ist, den Sequenzdatenstrom (40) einschließlich des eingefügten Identifizierungsbild-Datensatzes in einem einzigen Datenpaket zu speichern.

6. Digitale Bewegtbildkamera (10) nach einem der vorhergehenden Ansprüche,
wobei die Steuereinheit (16) dazu eingerichtet ist, den Sequenzdatenstrom (40) vor oder während des Speicherns zu komprimieren.

7. Digitale Bewegtbildkamera (10) nach einem der vorhergehenden Ansprüche,
wobei sich der eingefügte Identifizierungsbild-Datensatz am Anfang des Sequenzdatenstroms (40) befindet.

8. Digitale Bewegtbildkamera (10) nach einem der vorhergehenden Ansprüche,
wobei der Identifizierungsbild-Datensatz ein einzelnes Szenen-Identifizierungsbild (42) repräsentiert.

9. Digitale Bewegtbildkamera (10) nach einem der Ansprüche 1 bis 7, wobei der Identifizierungsbild-Datensatz eine mehrere Einzelbilder umfassende Szenen-Identifizierungssequenz repräsentiert.

10. Digitale Bewegtbildkamera (10) nach Anspruch 9,
wobei die Szenen-Identifizierungssequenz aus mehreren in Folge erfassten Einzelbildern oder aus mehreren Kopien eines einzigen Einzelbildes zusammengesetzt ist.

11. Digitale Bewegtbildkamera (10) nach einem der vorhergehenden Ansprüche,
wobei ein oder mehrere in dem ursprünglich erzeugten Sequenzdatenstrom (40) vorhandene Einzelbilder (44A - 44C) durch den eingefügten Identifizierungsbild-Datensatz ersetzt sind, wobei bevorzugt die Anzahl der ersetzten Einzelbilder (44A - 44C) gleich der Anzahl der Bilder des Identifizierungsbild-Datensatzes ist.

12. Digitale Bewegtbildkamera (10) nach einem der vorhergehenden Ansprüche,
wobei die Steuereinheit (16) dazu eingerichtet ist, den Identifizierungsbild-Datensatz in dem Zwischenspeicher (18) gespeichert zu halten, bis die Steuereinheit (16) einen Szenen-Aufnahmebefehl empfängt.

13. Digitale Bewegtbildkamera (10) nach einem der vorhergehenden Ansprüche,
wobei die Steuereinheit (16) dazu eingerichtet ist, den Identifizierungsbild-Datensatz nach dem Einfügen in den Sequenzdatenstrom (40) aus dem Zwischenspeicher (18) zu löschen.

14. Digitale Bewegtbildkamera (10) nach einem der vorhergehenden Ansprüche,
wobei die Steuereinheit (16) dazu eingerichtet ist, den Identifizierungsbild-Datensatz aufgrund der Betätigung eines zugeordneten Bedienelements (20) zu löschen, bevor der Identifizierungsbild-Datensatz in einen nachfolgend erzeugten Sequenzdatenstrom (40) eingefügt wird.

15. Digitale Bewegtbildkamera (10) nach einem der vorhergehenden Ansprüche,
wobei das Szenen-Identifizierungsbild (42) eine Wiedergabe einer von dem Bildsensor (14) erfassten Synchronklappe oder Informationstafel umfasst, auf welcher die zur Identifizierung der nachfolgenden Sequenz von aufeinander folgenden Einzelbildern (44A - 44C) notwendigen Informationen angeschrieben sind oder angezeigt werden.

## Revendications

1. Caméra numérique à images animées (10), comprenant un capteur d'images électronique (14) pour générer des signaux d'image, et une unité de commande (16),
l'unité de commande (16) étant conçue pour générer, en réponse à un ordre de prise de scène, à partir des signaux d'image du capteur d'images (14), un flux de données de séquence (40) représentant une séquence d'images individuelles successives (44A-44C), et pour transmettre le flux de données de séquence (40) à un dispositif de stockage de séquence (24) afin de stocker le flux de données de séquence (40),
**caractérisée en ce que**
l'unité de commande (16) est conçue pour générer, en réponse à un ordre de prise d'image d'identification, à partir des signaux d'image du capteur d'images (14), un ensemble de données d'image d'identification représentant au moins une image d'identification de scène (42) ayant des informations nécessaires à l'identification d'une scène, et pour stocker temporairement l'ensemble de données d'image d'identification dans une mémoire tampon (18),
l'unité de commande (16) étant en outre conçue pour insérer l'ensemble de données d'image d'identification, stocké temporairement, dans un flux de données de séquence (40) généré ultérieurement, de telle sorte que, dans la représentation du flux de données de séquence (40), l'image d'identification de scène (42) précède la séquence d'images individuelles successives (44A-44C), et que le flux de données de séquence (40), y compris l'ensemble de données d'image d'identification inséré, constitue un flux de données fermé.

2. Caméra numérique à images animées (10) selon la revendication 1, dans laquelle la caméra à images animées (10) comprend au moins un premier élément de manoeuvre (20) et un deuxième élément de manoeuvre (22), un actionnement du premier élément de manoeuvre (20) déclenchant la génération d'un ordre de prise d'image d'identification, et un actionnement du deuxième élément de manoeuvre (22) déclenchant la génération de l'ordre de prise de scène.

3. Caméra numérique à images animées (10) selon la revendication 1 ou 2, dans laquelle la caméra à images animées (10) comprend une entrée de commande configurée pour recevoir l'ordre de prise d'image d'identification.

4. Caméra numérique à images animées (10) selon l'une des revendications précédentes,
dans laquelle l'unité de commande (16) est conçue pour transmettre le flux de données de séquence (40), y compris l'ensemble de données d'image d'identification inséré, au dispositif de stockage de séquence (24) de telle sorte que le flux de données de séquence (40), y compris l'ensemble de données d'image d'identification inséré, peut être stocké dans un seul paquet de données, en particulier dans un seul fichier.

5. Caméra numérique à images animées (10) selon l'une des revendications précédentes,
dans laquelle la caméra à images animées (10) comprend le dispositif de stockage de séquence (24), la caméra à images animées (10) étant conçue pour stocker le flux de données de séquence (40), y compris l'ensemble de données d'image d'identification inséré, dans un seul paquet de données.

6. Caméra numérique à images animées (10) selon l'une des revendications précédentes,
dans laquelle l'unité de commande (16) est conçue pour comprimer le flux de données de séquence (40) avant ou pendant le stockage.

7. Caméra numérique à images animées (10) selon l'une des revendications précédentes,
dans laquelle l'ensemble de données d'image d'identification inséré se trouve au début du flux de données de séquence (40).

8. Caméra numérique à images animées (10) selon l'une des revendications précédentes,
dans laquelle l'ensemble de données d'image d'identification représente une image d'identification de scène (42) individuelle.

9. Caméra numérique à images animées (10) selon l'une des revendications 1 à 7,
dans laquelle l'ensemble de données d'image d'identification représente une séquence d'identification de scène comprenant plusieurs images individuelles.

10. Caméra numérique à images animées (10) selon la revendication 9,
dans laquelle la séquence d'identification de scène est composée de plusieurs images individuelles saisies consécutivement ou de plusieurs copies d'une seule image individuelle.

11. Caméra numérique à images animées (10) selon l'une des revendications précédentes,
dans laquelle une ou plusieurs images individuelles (44A - 44C) présentes dans le flux de données de séquence (40) généré à l'origine sont remplacées par l'ensemble de données d'image d'identification inséré, de préférence le nombre d'images individuelles (44A - 44C) remplacées étant égal au nombre d'images de l'ensemble de données d'image d'identification.

12. Caméra numérique à images animées (10) selon l'une des revendications précédentes,
dans laquelle l'unité de commande (16) est conçue pour conserver l'ensemble de données d'image d'identification stocké dans la mémoire tampon (18) jusqu'à ce que l'unité de commande (16) reçoive un ordre de prise de scène.

13. Caméra numérique à images animées (10) selon l'une des revendications précédentes,
dans laquelle l'unité de commande (16) est conçue pour effacer l'ensemble de données d'image d'identification de la mémoire tampon (18) après son insertion dans le flux de données de séquence (40).

14. Caméra numérique à images animées (10) selon l'une des revendications précédentes,
dans laquelle l'unité de commande (16) est conçue pour effacer l'ensemble de données d'image d'identification en raison de l'actionnement d'un élément de manoeuvre associé (20) avant que l'ensemble de données d'image d'identification ne soit inséré dans un flux de données de séquence (40) généré ultérieurement.

15. Caméra numérique à images animées (10) selon l'une des revendications précédentes,
dans laquelle l'image d'identification de scène (42) comprend une reproduction d'un clap ou d'un panneau d'information saisi par le capteur d'images (14), sur lequel sont inscrites ou affichées les informations nécessaires à l'identification de la séquence suivante d'images individuelles successives (44A - 44C).

## Claims

1. A digital motion picture camera (10), comprising an electronic image sensor (14) for generating image signals; and a control unit (16),
wherein the control unit (16) is configured, in response to a scene record command, to generate a sequence data stream (40), which represents a sequence of consecutive frames (44A - 44C), from the image signals of the image sensor (14) and to transmit the sequence data stream (40) to a sequence memory device (24) in order to store the sequence data stream (40),
**characterized in that**
the control unit (16) is configured, in response to an identification image record command, to generate an identification image data set, which represents at least one scene identification image (42) comprising necessary information for identifying a scene, from the image signals of the image sensor (14) and to buffer the identification image data set in a buffer memory (18),
with the control unit (16) further being configured to insert the buffered identification image data set into a subsequently generated sequence data stream (40) such that, in the representation of the sequence data stream (40), the sequence of consecutive frames (44A - 44C) is preceded by the scene identification image (42) and the sequence data stream (40), including the inserted identification image data set, forms a closed data stream.

2. A digital motion picture camera (10) in accordance with claim 1,
wherein the motion picture camera (10) has at least a first operating element (20) and a second operating element (22), wherein an actuation of the first operating element (20) triggers a generation of the identification image record command and an actuation of the second operating element (22) triggers a generation of the scene record command.

3. A digital motion picture camera (10) in accordance with claim 1 or claim 2, wherein the motion picture camera (10) has a control input which is configured to receive the identification image record command.

4. A digital motion picture camera (10) in accordance with any one of the preceding claims,
wherein the control unit (16) is configured to transmit the sequence data stream (40), including the inserted identification image data set, to the sequence memory device (24) such that the sequence data stream (40), including the inserted identification image data set, can be stored in a single data packet, in particular in a single file.

5. A digital motion picture camera (10) in accordance with any one of the preceding claims,
wherein the motion picture camera (10) comprises the sequence memory device (24), wherein the motion picture camera (10) is configured to store the sequence data stream (40), including the inserted identification image data set, in a single data packet.

6. A digital motion picture camera (10) in accordance with any one of the preceding claims,
wherein the control unit (16) is configured to compress the sequence data stream (40) before or during storage.

7. A digital motion picture camera (10) in accordance with any one of the preceding claims,
wherein the inserted identification image data set is located at the start of the sequence data stream (40).

8. A digital motion picture camera (10) in accordance with any one of the preceding claims,
wherein the identification image data set represents a single scene identification image (42).

9. A digital motion picture camera (10) in accordance with any one of the claims 1 to 7,
wherein the identification image data set represents a scene identification sequence comprising a plurality of frames.

10. A digital motion picture camera (10) in accordance with claim 9,
wherein the scene identification sequence is composed of a plurality of frames captured in succession or of a plurality of copies of a single frame.

11. A digital motion picture camera (10) in accordance with any one of the preceding claims,
wherein one or more frames (44A - 44C) present in the originally generated sequence data stream (40) are replaced with the inserted identification image data set, wherein the number of replaced frames (44A - 44C) is preferably equal to the number of images of the identification image data set.

12. A digital motion picture camera (10) in accordance with any one of the preceding claims,
wherein the control unit (16) is configured to keep the identification image data set stored in the buffer memory (18) until the control unit (16) receives a scene record command.

13. A digital motion picture camera (10) in accordance with any one of the preceding claims,
wherein the control unit (16) is configured to delete the identification image data set from the buffer memory (18) after the insertion into the sequence data stream (40).

14. A digital motion picture camera (10) in accordance with any one of the preceding claims,
wherein the control unit (16) is configured to delete the identification image data set due to the actuation of an associated operating element (20) before the identification image data set is inserted into a subsequently generated sequence data stream (40).

15. A digital motion picture camera (10) in accordance with any one of the preceding claims,
wherein the scene identification image (42) comprises a reproduction of a clapperboard or information slate which is acquired by the image sensor (14) and on which the information necessary for identifying the next sequence of consecutive frames (44A - 44C) is written or displayed.
